# EUROPEAN PATENT APPLICATION

(11) **EP 4 548 987 A1**
(43) Date of publication of application: **07.05.2025**
(21) Application number: 23831440.5
(22) Date of filing: 27.06.2023
(51) Int. Cl.: A63F 13/422, A63F 13/45, A63F 13/533, A63F 13/812

(54) **PROGRAM AND INFORMATION PROCESSING SYSTEM**

(30) Priority: 28.06.2022 JP 2022103970
(71) Applicant: COLOPL, INC., Tokyo 107-0052 (JP)
(72) Inventor: BABA, Naruatsu, Tokyo 107-0052 (JP); NAKAMAE, Shuta, Tokyo 107-0052 (JP)
(74) Representative: Gille Hrabal Partnerschaftsgesellschaft mbB Patentanwälte
(86) International application number: PCT/JP2023/023753
(87) International publication number: WO 2024/005000

(57) **Abstract**

A program causes a computer to function as: a first progress means which progresses a game in a first progress mode in which the game is progressed based on an operation of a user; a second progress means which progresses the game in a second progress mode in which the game is able to be progressed without requiring at least part of the operation of the user that affects progress of the game in the first progress mode; and a success/failure decision means which decides success or failure of a predetermined event when progressing the game in the second progress mode, based on an environment in a game space and an attribute of a character operated by the user.

## Description

### TECHNICAL FIELD

The present invention relates to a program and an information processing system.

### BACKGROUND ART

Conventionally, a game that can progress automatically is known (see, for example, Patent Document 1).

### Prior Art Document

### Patent Document

Patent Document 1: Japanese Patent Application Publication No. 2020-168381

### SUMMARY OF INVENTION

### TECHNICAL PROBLEM

However, in a game, further improvement in amusement has been demanded.

The present invention has been made in view of the above circumstances, and an object of the present invention is to improve amusement of a game.

### SOLUTION TO PROBLEM

According to an aspect of an embodiment illustrated in the present disclosure, there is provided a program which causes a computer to function as:
a first progress means which progresses a game in a first progress mode in which the game is progressed based on an operation of a user;
a second progress means which progresses the game in a second progress mode in which the game is able to be progressed without requiring at least part of the operation of the user that affects progress of the game in the first progress mode; and
a success/failure decision means which decides success or failure of a predetermined event when progressing the game in the second progress mode, based on an environment in a game space and an attribute of a character operated by the user

### ADVANTAGEOUS EFFECTS OF INVENTION

The present invention makes it possible to improve amusement of a game.

### BRIEF DESCRIPTION OF THE DRAWINGS

Fig. 1 is a diagram illustrating a schematic configuration of a game system.
Fig. 2 is a block diagram illustrating a functional configuration of the game system.
Fig. 3 is a diagram illustrating an example of a display screen in a first state.
Fig. 4 is a diagram illustrating an aspect in which a moving object moves.
Fig. 5 is a diagram illustrating an aspect in which a moving object arrives at an indicator object.
Fig. 6 is a flowchart illustrating an example of processing executed in a first state.
Fig. 7 is a diagram illustrating an example of a display screen in a second state.
Fig. 8 is a flowchart illustrating an example of processing executed in the second state.
Fig. 9 is a diagram for describing an example of progress of a game in a second state.

### DESCRIPTION OF EXEMPLARY EMBODIMENTS

Hereinafter, embodiments of the present invention will be described with reference to the drawings.

### <Hardware Configuration of Game System>

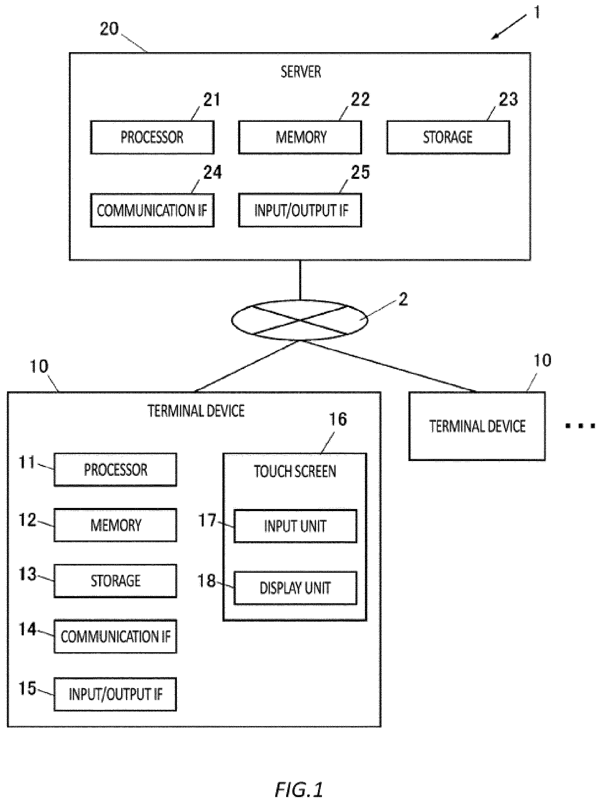

As illustrated in Fig. 1, a game system 1 of the present embodiment includes a plurality of terminal devices 10 and a server 20.

The terminal device 10 and the server 20 are connected via a network 2. The network 2 may be constituted by, for example, any of the Internet, a mobile communication system (for example, 3G, 4G, 5G, Long Term Evolution (LTE), and the like), Wireless Fidelity (WiFi), BLUETOOTH (registered trademark), other communication lines, a combination thereof, or the like. Furthermore, it does not matter whether the connection between the terminal device 10 and the server 20 is a wired connection or a wireless connection.

The server 20 (in other words, a computer and an information processing device) may be, for example, a general-purpose computer such as a workstation or a personal computer. The server 20 includes a processor 21, a memory 22, a storage 23, a communication interface (IF) 24, and an input/output IF 25. These configurations included in the server 20 are connected to each other by a communication bus.

The processor 21 controls the entire operation of the server 20. The processor 21 may include a central processing unit (CPU), a micro processing unit (MPU), a graphics processing unit (GPU), and the like. The processor 21 reads a program from the storage 23 and deploys the program in the memory 22. The processor 21 executes the deployed program.

The memory 22 is a main storage device. The memory 22 is constituted by, for example, a storage device such as a read only memory (ROM) and a random access memory (RAM). The memory 22 temporarily stores a program and various types of data read from the storage 23 by the processor 21, thereby providing a work area to the processor 21. The memory 22 also temporarily stores various types of data generated while the processor 21 operates according to the program.

Note that, in the present embodiment, the program may be a program for implementing a game by the terminal device 10. Furthermore, the program may be for implementing the game by cooperation of the terminal device 10 and the server 20. Note that the game implemented by the cooperation of the terminal device 10 and the server 20 may be, for example, a game executed on a browser activated in the terminal device 10. Furthermore, the program may be for implementing the game by cooperation of a plurality of terminal devices 10. Furthermore, the various types of data include, for example, data regarding the game such as user information and game information, and an instruction and a notification transmitted and received between the terminal device 10 and the server 20.

The storage 23 is an auxiliary storage device. The storage 23 is constituted by, for example, a storage device such as a flash memory or a hard disk drive (HDD). The storage 23 stores various types of data regarding the game.

The communication IF 24 controls transmission and reception of various types of data between the server 20 and the terminal device 10 or the like via a network.

The input/output IF 25 is an interface for the server 20 to receive an input of data and an interface for the server 20 to output data. The input/output IF 25 can include, for example, an input unit that is information input equipment such as a mouse or a keyboard, and a display unit that is equipment that displays and outputs an image.

The terminal device 10 (in other words, a computer and an information processing device) may be, for example, a smartphone, a feature phone, a PERSONAL DIGITAL ASSISTANT (PDA) (registered trademark), a tablet computer, a personal computer, a wearable terminal, a game device, or the like. The terminal device 10 may be a mobile terminal. The terminal device 10 may be a portable terminal when a user executes the game.

The terminal device 10 includes a processor 11, a memory 12, a storage 13, a communication IF 14, an input/output IF 15, an input unit 17, and a display unit 18. These configurations included in the terminal device 10 are connected to each other by a communication bus.

The processor 11 controls the entire operation of the terminal device 10. The processor 11 may include a CPU, an MPU, a GPU, and the like. The processor 11 reads a program from the storage 13 and deploys the program in the memory 12. The processor 11 executes the deployed program.

The memory 12 is a main storage device. The memory 12 is constituted by, for example, a storage device such as a ROM and a RAM. The memory 12 temporarily stores a program and various types of data read from the storage 13 by the processor 11, thereby providing a work area to the processor 11. The memory 12 also temporarily stores various types of data generated while the processor 11 operates according to the program.

The storage 13 is an auxiliary storage device. The storage 13 is constituted by, for example, a storage device such as a flash memory or an HDD. The storage 13 stores various types of data regarding the game.

The communication IF 14 controls transmission and reception of various types of data between the terminal device 10 and the server 20 or the like via a network.

The input/output IF 15 is an interface for the terminal device 10 to receive an input of data and an interface for the terminal device 10 to output data. The input/output IF 15 may input/output data, for example, via a universal serial bus (USB) or the like. The input/output IF 15 can include the input unit 17, the display unit 18, or the like.

The input unit 17 receives an input by the user. The input unit 17 may be, for example, a pointing device such as a touch pad. The display unit 18 displays an image. The display unit 18 may be, for example, a liquid crystal display, an organic electro-luminescence (EL) display, or the like. The terminal device 10 includes, for example, a touch screen 16 which is an electronic component obtained by combining the input unit 17 and the display unit 18.

The input unit 17 has a function of detecting a position input to the input surface by a user operation (for example, a touch operation, a tap operation, a slide operation, a swipe operation, a flick operation, and the like) and transmitting, as an input signal, information indicating the detected position. As a touch panel as the input unit 17, a capacitive type, a resistive film type, or the like can be adopted, but other types may be adopted.

Note that the input unit 17 may be, for example, a keyboard, various physical buttons, various sensors (for example, an acceleration sensor, an angular velocity sensor, or the like), an operation stick, a camera, a microphone, or the like. Furthermore, the display unit 18 may be, for example, a projector or the like.

### <Functional Configuration of Game System>

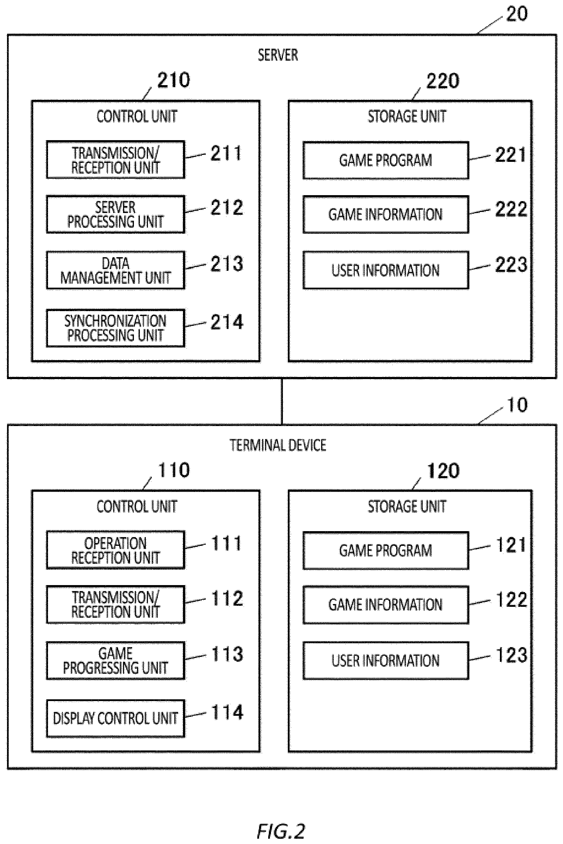

Fig. 2 is a block diagram illustrating functional configurations of the server 20 and the terminal device 10. The server 20 in the present embodiment has, for example, a function of providing each terminal device 10 with various types of data and programs necessary for implementing the game, a function of collecting and managing data regarding the game from each terminal device 10, a function of performing synchronization processing among the plurality of terminal devices 10, and the like.

Note that in the present embodiment, the server 20 identifies each user and the terminal device 10 by using an account of the user registered in advance for each game. A method of registering the account is not particularly limited. For example, the terminal device 10 or another device such as a personal computer may transmit, to the server 20, information necessary for account registration of the user based on the operation of the user, and the server 20 may create and save the account of each user based on the received information.

As illustrated in Fig. 2, the server 20 functions as a control unit 210 and a storage unit 220 by cooperation of the processor 21, the memory 22, the storage 23, the communication interface (IF) 24, the input/output IF 25, and the like. The storage unit 220 stores various types of data used by the control unit 210. Examples of the various types of data include a game program 221, game information 222, and user information 223.

The game program 221 is a program for implementing the game. The game information 222 and the user information 223 are data to be referred to when the control unit 210 executes the game program 221.

Note that the game program 221 may include a program (a game program 121 to be described later) to be transmitted to the terminal device 10 and executed on the terminal device 10 side in addition to a game program to be executed on the server 20 side. Alternatively, the storage unit 220 may store the game program 221 to be executed on the server 20 side and the program to be executed on the terminal device 10 side.

The game information 222 is information common among accounts. The game information 222 includes, for example, information for defining a various types of game space. The game space is a space in which an object of a character (hereinafter, also referred to as an "operation character" or a "player character") operable by the user is disposed. Furthermore, the game information 222 includes, for example, various types of setting information regarding objects common among accounts, such as an arrangement position, a size, a color, and a shape of a background object such as a building, a tree, and a stone, or an object of a non player character (NPC) disposed in the game space. Furthermore, the game information 222 includes, for example, setting values of various parameters of the non player character. Hereinafter, an object of a character disposed in the game space may be simply referred to as a "character".

The user information 223 is information managed for each account of the game. The user information 223 includes, for example, information regarding the operation character, information regarding owned assets, information indicating the degree of progress of the game, and the like. Examples of the owned assets include in-game currency, items, character gear, and the like.

The control unit 210 controls various types of processing regarding the game by executing the game program 221 stored in the storage unit 220. The control unit 210 includes, for example, a transmission/reception unit 211, a server processing unit 212, a data management unit 213, and a synchronization processing unit 214.

The transmission/reception unit 211 transmits or receives various types of data. For example, the transmission/reception unit 211 receives, from each terminal device 10, a transmission request of various types of data and programs, a request for synchronization processing for supporting a multi-play function, data to be subjected to synchronization processing, and the like, and passes them to the server processing unit 212. Furthermore, the transmission/reception unit 211 transmits, to each terminal device 10, various types of data and programs including an instruction or the like for synchronization under the control of the server processing unit 212.

In the present embodiment, the multi-play function is a function of allowing game processing by a plurality of accounts to progress in a synchronized state. In a case where a plurality of accounts logged in to the game system 1 participate in the same game, the server 20 and the terminal device 10 of the game system 1 execute various types of processing for supporting the multi-play function.

The server processing unit 212 provides the terminal device 10 with the game by executing arithmetic processing described in the game program 221 in response to the request or the like from the terminal device 10. For example, when receiving the request for the synchronization processing for supporting the multi-play function or the data to be subjected to the synchronization processing from the terminal device 10 via the transmission/reception unit 211, the server processing unit 212 executes the synchronization processing for supporting the multi-play function. Furthermore, the server processing unit 212 instructs the transmission/reception unit 211 to transmit the game information 222 or the user information 223. Further, the server processing unit 212 instructs the data management unit 213 to add, update, or delete a record of the game information 222 or the user information 223.

The data management unit 213 manages various types of data stored in the storage unit 220 in accordance with the instruction of the server processing unit 212. For example, the data management unit 213 reads the game information 222 or the user information 223 in accordance with the instruction from the server processing unit 212, and transmits the game information 222 or the user information 223 to the terminal device 10 via the transmission/reception unit 211. Furthermore, the data management unit 213 adds, updates, or deletes the record of the game information 222 or the user information 223 in accordance with the instruction from the server processing unit 212.

The synchronization processing unit 214 executes the synchronization processing for supporting the multi-play function of the game in accordance with the instruction from the server processing unit 212. For example, when the server 20 transmits information to the plurality of terminal devices 10, the synchronization processing unit 214 synchronizes the game progressing across the terminal devices 10 by simultaneously transmitting the information to each of the terminal devices 10. Specifically, the synchronization processing unit 214 simultaneously transmits operation information, which is received within a predetermined period (for example, one frame) from the terminal device 10 corresponding to each account, to each terminal device 10, every predetermined period. The operation information is information regarding an operation input to the terminal device 10. A synchronization timing and information to be synchronized may be received from the server processing unit 212 as needed. By executing the synchronization processing, an in-game event caused by an operation input by one terminal device 10 can be simultaneously reflected in another terminal device 10.

The terminal device 10 in the present embodiment has, for example, a function as an input device that receives an input operation of the user, a function as an output device that outputs an image or a sound of a game, and the like.

The terminal device 10 functions as a control unit 110 and a storage unit 120 by cooperation of the processor 11, the memory 12, the storage 13, the communication IF 14, the input/output IF 15, and the like. The storage unit 120 stores various types of data used by the control unit 110. Examples of the various types of data include the game program 121, game information 122, and user information 123.

The game program 121 is a program for implementing the game on the terminal device 10 side. The game information 122 and the user information 123 are data to be referred to when the control unit 110 executes the game program 121.

The game information 122 includes information similar to the game information 222 of the server 20 described above. Therefore, the description of the game information 122 is omitted here.

The user information 123 is data regarding an account of a user who uses the terminal device 10, and includes information similar to the user information 223 of the server 20 described above. Therefore, the description of the user information 123 is omitted here.

The control unit 110 controls various types of processing regarding the game executed in the terminal device 10 by executing the game program 121 stored in the storage unit 120. The control unit 110 includes, for example, an operation reception unit 111, a transmission/reception unit 112, a game progressing unit 113, and a display control unit 114.

The operation reception unit 111 receives an operation (hereinafter, also referred to as an "input operation") input by the user via the input unit 17. Specifically, in a case where the input operation is performed on the input unit 17, the operation reception unit 111 detects the coordinates of an input position and the type of the input operation. Examples of the type of the input operation include various operations by a finger or the like, such as a touch operation, a tap operation, a slide operation, a swipe operation, a flick operation, a pinch-in operation, and a pinch-out operation. The input operation is not limited to an operation of physically contacting the input unit 17 (for example, the touch screen 16), and may include a non-contact operation. Note that an operation for ending the input operation that has been performed so far, such as a touch-off operation for ending the contact with the touch screen 16, can be also said to be an aspect of the input operation.

Here, the operation reception unit 111 can also receive an input operation performed by using operation equipment connected via the input/output IF 15, in a manner similar to that of the input operation to the input unit 17.

The transmission/reception unit 112 transmits and receives various types of data. Specific examples will be described below.

The transmission/reception unit 112 transmits, to the server 20, the game information 122 or the user information 123, and a synchronization request for supporting the multi-play function. The transmission/reception unit 112 receives, from the server 20, various types of data, programs, data for synchronization for supporting the multi-play function, and the like. The data for synchronization includes, for example, synchronization instruction data for instructing the synchronization among the terminal devices 10 participating in the multi-play. The synchronization instruction data includes, for example, data to be synchronized and a type of the data, data for specifying a synchronization timing, and the like.

The transmission/reception unit 112 transmits, to the server 20, operation information regarding the input operation received by the operation reception unit 111. The transmission/reception unit 112 receives, from the server 20, operation information regarding an operation input by another user in another terminal device 10.

The game progressing unit 113 executes various types of processing regarding the progress of the game. Specific examples will be described below.

The game progressing unit 113 defines the game space based on the information for defining the game space included in the game information 122. The game progressing unit 113 disposes an object in the game space based on the object setting information included in the game information 122. The game progressing unit 113 controls the object disposed in the game space. Specifically, the game progressing unit 113 controls the object so as to change the position, orientation, shape, color, and the like of the object in the game space or to cause the object to perform a predetermined motion.

The game progressing unit 113 defines a virtual camera for designating an area to be presented to the user in the game space. The game progressing unit 113 disposes the virtual camera in the game space by defining the position and the orientation of the virtual camera in the game space. The game progressing unit 113 instructs the display control unit 114 to generate an image in which a visual field area defined by the virtual camera and an object disposed in the visual field area are drawn.

The position and orientation of the virtual camera can be appropriately decided for each game space. For example, the game progressing unit 113 disposes the virtual camera such that a specific object is positioned at the center of the visual field area in a specific orientation, with reference to the position and orientation of the specific object. At that time, the game progressing unit 113 adjusts the position and orientation of the virtual camera by using a direction, a distance, and an angle with respect to the specific object. The specific object may be, for example, a dynamic object such as an operation character or a non player character, or may be a static object such as a building, a tree, or a stone. The dynamic object includes an operation character that acts based on the operation of each user and a character (for example, a non player character, an enemy character, or the like) that acts based on the game programs 121 and 221.

The game progressing unit 113 interprets the instruction content of the user based on the coordinates of the input position detected by the operation reception unit 111, the type of the input operation, and the like. The game progressing unit 113 executes various types of determination processing related to the progress of the game, based on the interpreted instruction content or the like. The game progressing unit 113 progresses the game while controlling the object, the virtual camera, or the like, based on the result of the determination processing and the like. The game progressing unit 113 updates, adds, or deletes the game information 122 or the user information 123 according to the progress status of the game.

The display control unit 114 controls the display unit 18 to display an image. Specific examples will be described below.

The display control unit 114 generates an image in which the visual field area of the virtual camera defined by the game progressing unit 113 in the game space and the object existing in the area are drawn, and controls the display unit 18 to display the image. The display control unit 114 can draw an object related to a user interface (UI) necessary for various operations of the game, such as an icon, a button, and a menu indicating various parameters, in a superimposed manner on the image to be displayed on the display unit 18.

Note that the functions of the terminal device 10 and the server 20 illustrated in Fig. 2 are merely examples. Each device of the terminal device 10 and the server 20 may have at least part of the functions of other devices. Furthermore, each device of the terminal device 10, the server 20, and the like may not be implemented by integrated equipment, and may be implemented by, for example, a plurality of pieces of equipment connected via a network or the like. Furthermore, the game system 1 may be constituted by only the terminal device 10 or the server 20, for example. In other words, the game system 1 may not be implemented by a plurality of pieces of equipment connected via a network.

### <Processing According to Present Embodiment>

Next, processing according to the present embodiment will be described. Note that, in the present embodiment, a description will be given assuming that the processor 11 of the terminal device 10 executes the game program stored in the game system 1 to perform each processing to be described later. However, at least part of each processing to be described later may be executed by a processor different from the processor 11. In other words, a computer that executes the game program in the present embodiment may be either the terminal device 10 or the server 20, or may be implemented by a combination of a plurality of devices.

Hereinafter, a case where the configuration according to the present embodiment is applied to a golf game will be described as an example.

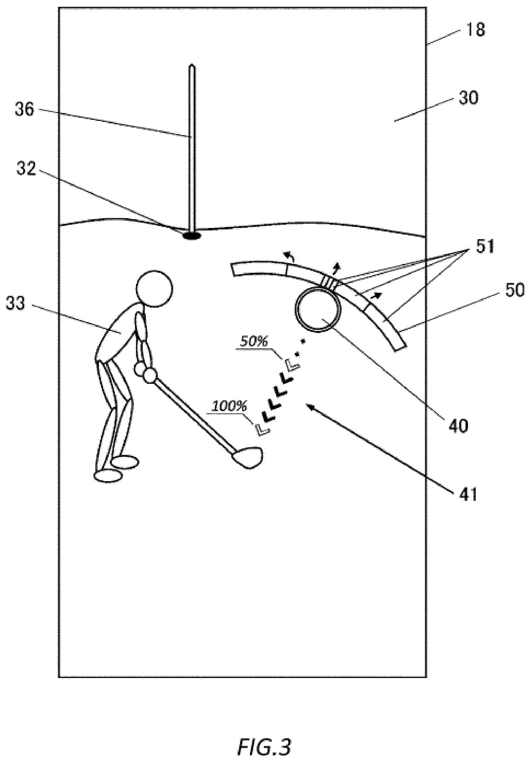

Figs. 3 to 5 are display screen examples illustrating a space including a golf course as a game space 30. The game space 30 and various objects displayed in superposition with the game space 30 will be described with reference to Figs. 3 to 5.

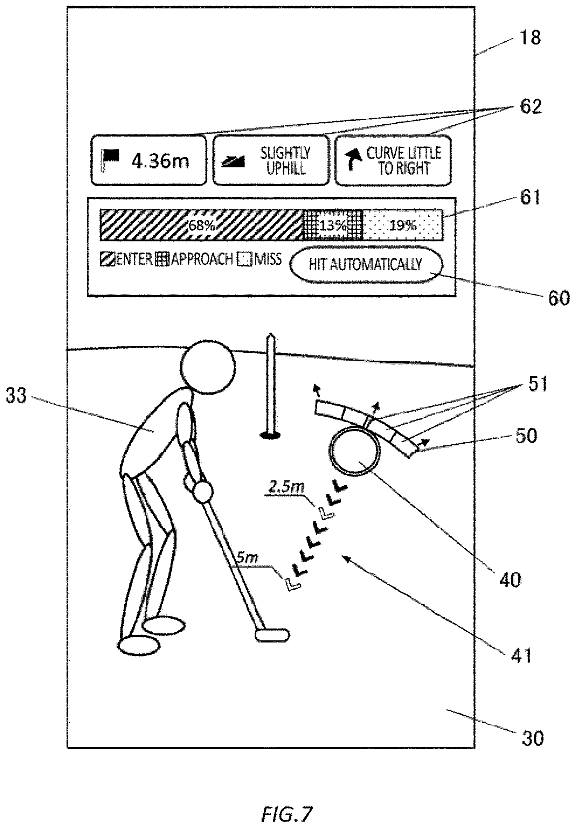

The display control unit 114 controls the display unit 18 to display the image of the game space 30 in accordance with an instruction from the game progressing unit 113. Specifically, the display control unit 114 generates an image in which the visual field area of the virtual camera defined by the control unit 110 in the game space 30 and the object existing in the area are drawn, and controls the display unit 18 to display the image. Specifically, the display control unit 114 controls the display unit 18 to display a ball 31 as an operation target object that is an object existing in the game space 30 and moves based on the operation of the user, a cup 32 as an object that is a target point for guiding the ball 31, a player character 33, and the like. Furthermore, the display control unit 114 draws an object related to a user interface (UI) necessary for various operations of the game, such as an icon, a button, and a menu indicating various parameters, in a superimposed manner on the image, and controls the display unit 18 to display the object. Specifically, the display control unit 114 controls the display unit 18 to display a cup indicator 36 indicating the position of the cup, and objects such as a moving object 40, a power indicator 41, an indicator object 50, and a second shot selection button 60 (see Fig. 7) to be described later.

The cup indicator 36 is an indicator displayed such that light of a predetermined color extends from the cup 32, for example. For example, the game progressing unit 113 sets the cup indicator 36 to a color that can be distinguished from the color of the turf of the course. By displaying the cup indicator 36, the user can easily visually recognize the position of the cup 32 in the game space 30 viewed from behind the player character 33.

The game progressing unit 113 executes game state control processing of shifting a game state between a first state and a second state during a game aiming to achieve a predetermined goal. The first state is a game state in which the game can be progressed based on the operation of the user that gives a predetermined effect to the operation target object. Furthermore, the second state is a game state in which the game can progress in a mode in which the influence of the user's skill on the achievement of the predetermined goal can be reduced as compared with a case where the game is progressed in a mode similar to the first state. Note that a game state other than the first state and the second state may be prepared as the game state.

In the present embodiment, during execution of one-hole (in other words, one-stage) game aiming to achieve the goal of putting the ball 31 into the cup 32, the game progressing unit 113 shifts the game state between the first state in which the ball 31 is moved based on a specific operation (for example, a first operation to be described later) by the user and the second state in which the ball 31 can be moved without the specific operation by the user. Specifically, in a case where the ball 31 is not positioned within a predetermined range from the cup 32 during the execution of one-hole game (for example, a case where the ball 31 is not positioned on green (here, green may include a color)), the game progressing unit 113 sets the game state to the first state, and in a case where the ball 31 is positioned within the predetermined range from the cup 32 (for example, a case where the ball 31 is positioned on the green), the game progressing unit 113 sets the game state to the second state. Note that the game progressing unit 113 sets the game state to the second state in a case where a relationship between the ball 31 and the cup 32 (or the green) is a predetermined relationship as described above, but such a correspondence relationship between the game state and the relationship between the ball 31 and the cup 32 (or the green) may be achieved by the game progressing unit 113 directly determining whether or not the relationship is established, or may be achieved by different processing. For example, the game progressing unit 113 may determine whether or not the ball 31 is positioned within the predetermined range from the cup 32 and switch the game state, may determine at which position the ball 31 is positioned in the game space 30 (for example, whether or not the ball 31 is positioned in a corresponding area on the green) and switch the game state, or may determine whether or not a putt shot is performed and switch the game state. Note that the switching of the game state is performed automatically (in other words, without the operation of the user) according to whether or not the ball 31 is positioned within the predetermined range from the cup 32. In other words, the game progressing unit 113 automatically switches the game state from the first state to the second state when the ball 31 moves from the cup 32 to the predetermined range. Note that whether or not to automatically switch the game state may be able to be set (in other words, selected) in advance on a predetermined setting screen or the like by the user. That is, in a case where such a setting is set in advance, the game state may be automatically switched when the ball 31 moves within the predetermined range from the cup 32, and in a case where the setting is not set, the game state may not be switched even when the ball 31 moves within the predetermined range from the cup 32.

### (Progress of Game in First State)

The progress of the game in the first state will be described below with reference to Figs. 3 to 5.

In the first state, as illustrated in Fig. 3, the game progressing unit 113 instructs the display control unit 114 to control the display unit 18 to display the ball 31 and the player character 33 taking an address posture. Furthermore, the game progressing unit 113 instructs the display control unit 114 to control the display unit 18 to display the moving object 40.

The moving object 40 has, for example, a circular shape, and is an object moving along a linear indicator (in Fig. 3, an indicator in which dot-shaped figures and V-shaped figures are arranged linearly) (hereinafter, referred to as the "power indicator 41") extending from the moving object 40 in a predetermined direction. The power indicator 41 may have a numerical value indicating the power of the shot. The numerical value indicating the power of the shot may be, for example, a percentage indicating a ratio of the power, or may be a yard, a meter, or the like indicating a carry distance.

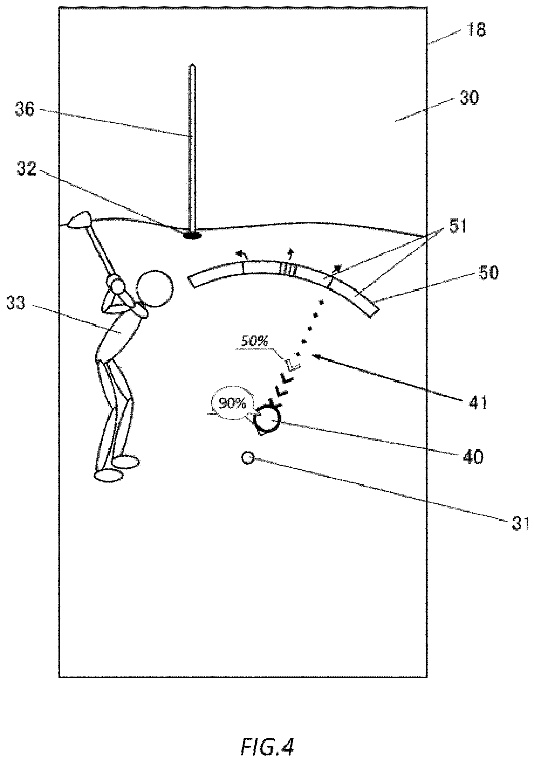

The operation reception unit 111 receives an operation in which the user selects a predetermined position on the touch screen 16. The game progressing unit 113 moves the moving object 40 according to a swipe operation performed by the user from the selected predetermined position (see Fig. 4). Specifically, when determining that the touch position of the user on the touch screen 16 overlaps the moving object 40, the game progressing unit 113 moves the moving object 40 according to the swipe operation of the user. Furthermore, when determining that the touch position of the user on the touch screen 16 is within a predetermined range around the moving object 40, the game progressing unit 113 may move the moving object 40 according to the swipe operation of the user. Accordingly, the user can grasp an image of a take-back motion of the player character, so that the amusement of the game is improved.

Note that the moving object 40 can be moved along the power indicator, but the description "along the power indicator" is not limited to the meaning that the moving object 40 moves directly above the power indicator, and it is sufficient that the moving object 40 moves in a direction in which the power indicator extends. Furthermore, the swipe operation for moving the moving object 40 may not pass directly above the power indicator. In other words, for example, an operation in a predetermined range or direction using the power indicator 41 as a marker can be set as an operation of moving the moving object 40.

Furthermore, the game progressing unit 113 may change the shape of the moving object 40 when moving the moving object 40 (see Figs. 3 to 5).

When the user performs the swipe operation on the moving object 40 along the power indicator 41 (in other words, when the swipe operation is performed in a direction away from the indicator object 50), the game progressing unit 113 instructs the display control unit 114 to control the display unit 18 to move and display the indicator object 50. Details of the indicator object 50 will be described below.

First, the structure of the indicator object 50 will be described in detail. As illustrated in Fig. 3, the indicator object 50 is an object which has, for example, a shape in which a fan-shaped peripheral edge is cut along an outer edge, and has a plurality of divided areas (hereinafter, referred to as an "indicator area(s) 51"). The indicator area 51 is, for example, an area indicating the quality of a shot. Here, the quality of the shot may be, for example, the degree of curve of the shot ball 31, the degree of success of the shot (for example, a degree of deviation from a targeted direction or a degree of contact with the ball 31), or the like. Specifically, among the plurality of indicator areas 51, the area at the center may be set as the indicator area 51 which allows the shot ball 31 to travel straight (in other words, toward the targeted direction), the area farther from the center to one side may be set as the indicator area 51 which allows the shot ball 31 to curve further to one side (in other words, deviate to one side from the targeted direction), the area farther from the center to another side may be set as the indicator area 51 which allows the shot ball 31 to curve further to another side (in other words, deviate to another side from the targeted direction), and the area positioned outside a predetermined range from the center may be set as the indicator area 51 which allows a missed shot. Furthermore, the indicator area 51 may be attached with a symbol indicating the trajectory of the shot ball 31. Here, the symbol may be, for example, an arrow or the like indicating the degree of curve of the trajectory of the shot ball 31.

The game progressing unit 113 sets the indicator area 51 based on the environment around the ball 31 in the game space 30. Specifically, the game progressing unit 113 determines the indicator area 51 such that in a case where the ball 31 is present at a position outside the fairway, such as a rough, a slope, or a bunker, it is more difficult to guide the ball 31 to a targeted place than in a case where the ball 31 is present on the fairway. More specifically, for example, the indicator area 51 may be set such that, in a case where the ball 31 is present at a position outside the fairway, the size of the indicator area 51 which allows the ball 31 to curve (in other words, deviate from the targeted direction) or the size of the indicator area 51 which allows a missed shot with respect to the indicator area 51 which allows the ball 31 to travel straight (in other words, toward the targeted direction) becomes larger (in other words, a ratio of the indicator area 51 which allows the ball to curve or the indicator area 51 which allows a missed shot in the indicator object 50 increases) than in a case where the ball 31 is present on the fairway. Furthermore, for example, in a case where the ball 31 is present at a position outside the fairway, the width of the entire indicator object 50 may be narrowed (or widened) as compared with a case where the ball 31 is present on the fairway.

Next, details of the motion of the indicator object 50 will be described. The game progressing unit 113 causes the indicator object 50 to reciprocate in a direction intersecting a traveling direction (in other words, the flying direction) of the ball 31 shot by the player character (see Figs. 3 to 5). Here, the traveling direction is a direction in which the ball 31 travels when the user shots the ball 31. In other words, the game progressing unit 113 causes the indicator object 50 to reciprocate in a direction intersecting the extending direction of the power indicator 41. Specifically, for example, the game progressing unit 113 causes the indicator object to reciprocate at a predetermined angular velocity along a predetermined curved line while bringing the indicator object 50 into contact with an end portion on one side of the power indicator 41. Accordingly, the difficulty level in executing an accurate shot can be increased, so that the amusement of the game is improved.

The game progressing unit 113 may control the indicator object 50 such that the speed of the reciprocation of the indicator object 50 increases as the moving object 40 moves away from the indicator object 50. Accordingly, as the user sets a greater power of the shot, it becomes more difficult to achieve a shot on the trajectory intended by the user, so that the amusement of the game is improved.

Furthermore, the game progressing unit 113 may change the moving speed of the reciprocation of the indicator object 50 based on the environment around the ball 31. For example, in a case where the ball 31 is present at a position outside the fairway, such as a rough, a slope, or a bunker, the game progressing unit 113 may increase the moving speed of the indicator object 50 as compared with a case where the ball 31 is present on the fairway. Accordingly, as environment for taking a shot is worse, the difficulty level in executing an appropriate shot can be higher, so that the amusement of the game is improved.

Furthermore, the game progressing unit 113 may keep the speed of the reciprocation of the indicator object 50 constant until the moving object 40 reaches a predetermined position (for example, 50%) of the power indicator 41. Further, the game progressing unit 113 may control the indicator object 50 such that the speed of the reciprocation of the indicator object 50 increases as the moving object 40 moves away from the indicator object 50 beyond the predetermined position of the power indicator 41. Accordingly, as the power of the shot is set to be larger, it becomes more difficult to achieve a shot on the trajectory intended by the user, so that the amusement of the game is improved. Note that, in a case of simply "as ... moves away", "as ... moves farther away", or the like, specifically, for example, a case of "the speed ... increases as ... moves away" or the like includes a case of including a section in which the speed does not change, such as a case where the speed does not change until a predetermined position is reached and the speed increases after the predetermined position is surpassed. Furthermore, it is sufficient that the speed and the like in this case have at least two stages.

Furthermore, the game progressing unit 113 may change the width of the indicator area 51 such that as the moving object 40 moves away from the indicator object 50, it becomes difficult to guide the ball 31 to the targeted place. Specifically, for example, the indicator area 51 may be set such that as the moving object 40 moves farther away from the indicator object 50, the size of the indicator area 51 which allows the ball 31 to curve (in other words, deviate from the targeted direction) or the size of the indicator area 51 which allows a missed shot with respect to the indicator area 51 which allows the ball 31 to travel straight (in other words, toward the targeted direction) increases (in other words, the ratio of the indicator area 51 which allows the ball to curve or the indicator area 51 which allows a missed shot in the indicator object 50 increases). Furthermore, for example, as the moving object 40 moves farther away from the indicator object 50, the width of the entire indicator object 50 may be narrowed (or widened).

Furthermore, the game progressing unit 113 may not vibrate the moving object 40 until the moving object 40 reaches a predetermined position (for example, 100%) of the power indicator 41, and may vibrate the moving object 40 in a case where the moving object exceeds the predetermined position of the power indicator 41. In other words, the game progressing unit 113 may cause the moving object 40 to move in a way that does not align with the intention of the user as the moving object 40 moves farther away from the indicator object 50. In still other words, as compared with a case where the moving object 40 is at a predetermined position close to the indicator object 50 (for example, a position of "100%" or less of the power indicator 41), the game progressing unit 113 may set the followability of the moving object 40 with respect to the operation (for example, the swipe operation) of the user to be lower in a case where the moving object 40 is at another predetermined position farther from the indicator object 50 than the predetermined position. Accordingly, as the user sets a greater power of the shot, it becomes more difficult to achieve a shot on the trajectory intended by the user, so that the amusement of the game is improved.

The game progressing unit 113 performs first shot execution processing of deciding the position of the moving object 40 based on the input operation of the user, moving the moving object 40 toward the indicator object 50 when the input operation is released, and executing a shot (hereinafter, also referred to as a "first shot") according to the release position of the input operation and the indicator of the indicator area 51 decided by a positional relationship between the indicator object 50 and the moving object 40 after the movement. In other words, the first shot execution processing is processing of determining an arrival position of the ball based on the release position of a specific input operation and the indicator of the indicator area 51 determined by the positional relationship between the indicator object 50 and the moving object 40 after the movement.

The first shot execution processing may include power decision processing and trajectory decision processing.

The power decision processing is, for example, processing of deciding the power of the shot based on the release position when the input operation of the user is released. Specifically, as illustrated in Fig. 4, the game progressing unit 113 causes the moving object 40 to move along the power indicator 41 from the predetermined position selected by the user according to the swipe operation of the user. The swipe operation here is, for example, an operation in a direction away from the indicator object 50.

In the power decision processing, the game progressing unit 113 increases the power of the shot as a distance, which is decided by the end point of the swipe operation, between the moving object 40 and the indicator object 50 increases. Specifically, for example, the game progressing unit 113 determines the power in accordance with the power indicator 41 corresponding to the release position. As the power determined in accordance with the power indicator 41 increases, the shot ball 31 flies farther. For example, the power indicator 41 is set such that the numerical value indicating the power increases as the power indicator 41 moves away from the indicator object 50. In Fig. 4, since release is performed at the position indicating "90%" of the power indicator 41, the power of the shot is "90%" of the maximum power.

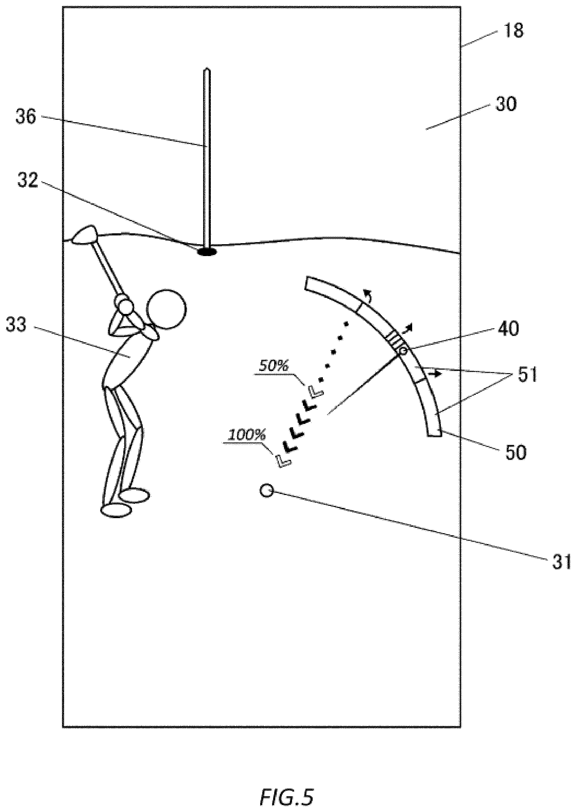

The trajectory decision processing is, for example, processing of deciding the trajectory (in other words, the heading direction of the ball 31) of the shot based on the positional relationship between the moving object 40 after the movement and the indicator object 50. Specifically, for example, when a specific input operation (for example, a swipe operation in a direction away from the indicator object 50) related to the decision of the power is released, the game progressing unit 113 causes the moving object 40 to move toward the indicator object 50 along the power indicator 41 (see Figs. 4 and 5). That is, at the same time as the power of the shot is decided, the process automatically proceeds to the procedure of deciding the trajectory of the ball. Accordingly, a seamless shot operation can be provided to the user, so that the amusement of the game is improved.

In the trajectory decision processing, the game progressing unit 113 may cause the moving object 40 to move in a direction instructed by the operation of the user. That is, the game progressing unit 113 causes the moving object 40 to move toward the indicator object 50 when the specific input operation related to the decision of the power is released, but at this time, for example, the moving object 40 may be moved in a direction instructed by the user with a flick operation at the time of the release. Fig. 5 is a display screen example in this case. Accordingly, a shot operation with a high degree of freedom can be provided to the user, so that the amusement of the game is improved. Furthermore, for example, at the time of the release, the user may perform a swipe operation (for example, a swipe operation in a direction in which the moving object 40 approaches the indicator object 50) in a direction different from the swipe operation related to the decision of the power, and cause the moving object 40 to move in a direction instructed by the user with the swipe operation in the different direction. Here, for example, the swipe operation in the different direction may be performed until the moving object 40 comes into contact with the indicator object 50, or the flick operation may be performed after the swipe operation in the different direction is performed to a point before the moving object 40 comes into contact with the indicator object 50. Furthermore, when an operation (for example, a touch-off operation of lifting the finger) to end the contact with the touch screen 16 is performed after a specific input operation related to the decision of the power of the shot is performed, the moving object 40 may move toward a predetermined position such as an end portion of the power indicator 41 on the indicator object 50 side (in other words, toward the indicator object 50). Note that the predetermined position may vary depending on the input operation related to the decision of the power or the like. That is, in the present embodiment, the "release of a specific input operation related to the decision of the power" is not limited to the release of the contact of the finger on the touch screen 16, and may be, for example, a change in the moving direction of the finger moving in a predetermined direction (for example, a direction away from the indicator object 50) (for example, a change of a predetermined angle or more or in a direction approaching the indicator object 50) or the like. In other words, the "release of a specific input operation" may mean that the operation (for example, the swipe operation in the predetermined direction) performed so far is changed to another operation (for example, a touch-off operation, a flick operation, or a swipe operation in another direction). Furthermore, it can also be said that the "release position" of the input operation is the position of the finger, the position of the moving object 40, or the like when the input operation is released. Note that, a flick operation, a swipe operation, or the like for instructing the moving direction of the moving object may be able to be performed after a specific input operation related to the decision of the power is performed and the contact with the touch screen 16 related to the input operation is temporarily released.

In the trajectory decision processing, the game progressing unit 113 may cause the moving object 40 to move at a constant speed, and may increase the moving speed of the moving object 40 as a distance of the release position from the indicator object 50 increases. Furthermore, the moving speed of the moving object 40 may be increased as the moving object 40 approaches the indicator object 50 from the release position. Accordingly, it is difficult to achieve a shot on the trajectory intended by the user, so that the amusement of the game is improved.

In the trajectory decision processing, as illustrated in Fig. 5, the game progressing unit 113 determines the indicator area 51 (hereinafter, referred to as an "arrival indicator 51") of the indicator object 50 at which the moving object 40 after the movement arrives. The game progressing unit 113 decides the trajectory of the ball 31 based on the arrival indicator 51. For example, in a case where the indicator area 51, which is set such that the ball curves right, becomes the arrival indicator 51, the game progressing unit 113 sets the shot ball 31 to be sliced or faded. Accordingly, the trajectory of the ball can be intentionally caused to curve by the operation of the user, and a situation in which the trajectory of the ball curves unintentionally can be provided to the user, so that the amusement of the game is improved.

That is, in the first shot execution processing, the game progressing unit 113 determines the arrival position of the ball based on, for example, the power of the shot decided in the power decision processing and the trajectory (in other words, the heading direction of the ball 31) of the shot decided in the trajectory decision processing.

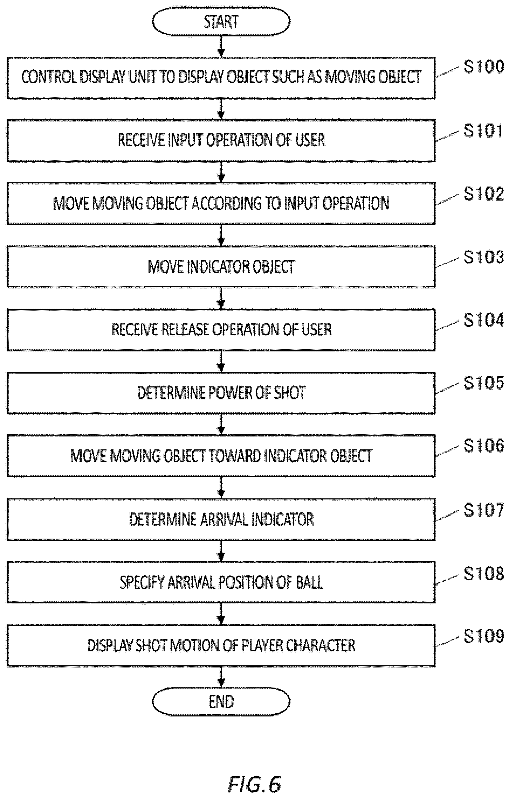

Next, a flow of processing executed by the terminal device 10 in the first state will be described with reference to Fig. 6. Fig. 6 is a flowchart illustrating the flow of the processing executed by the terminal device 10.

In step S100, the game progressing unit 113 instructs the display control unit 114 to control the display unit 18 to display an object such as the moving object 40. Specifically, as illustrated in Fig. 3, the game progressing unit 113 instructs the display control unit 114 to control the display unit 18 to display the player character 33 taking an address posture, the moving object 40, the power indicator 41, the indicator object 50, and the like.

Next, in step S101, the game system 1 receives an input operation of the user on the touch screen 16. For example, in a case where the game progressing unit 113 determines that a predetermined range around the moving object 40 is touched, the process proceeds to step S102.

Next, in step S102, the game progressing unit 113 moves the moving object 40 along the power indicator 41 according to the swipe operation of the user.

Next, in step S103, the game progressing unit 113 moves (for example, reciprocates) the indicator object 50.

Next, in step S104, the game progressing unit 113 receives an operation (for example, a touch-off operation, a flick operation, or a swipe operation in another direction) of the user releasing the swipe operation of moving the moving object 40.

Next, in step S105, the game progressing unit 113 determines the release position and determines the power of the shot corresponding to the release position.

Next, in step S106, the game progressing unit 113 moves the moving object 40 toward the indicator object 50.

Next, in step S107, the game progressing unit 113 determines the arrival indicator 51 of the indicator object 50 at which the moving object 40 after the movement arrives. The game progressing unit 113 determines the trajectory of the ball 31 corresponding to the arrival indicator 51.

Next, in step S108, the arrival position of the ball 31 is specified based on the power of the shot and the arrival indicator 51.

Next, in step S109, the game progressing unit 113 causes the display unit 18 to display an image in which the player character performs a shot motion. Furthermore, the game progressing unit 113 moves the position of the ball 31 in the game space 30 according to the determined power of the shot and the determined trajectory of the ball 31.

The game system repeatedly executes steps S100 to S109 for each shot.

### (Progress of Game in Second State)

The progress of the game in the second state will be described below with reference to Fig. 7.

In the second state, the game progressing unit 113 instructs the display control unit 114 to control the display unit 18 to display the ball 31 and the player character 33 taking an address posture. Furthermore, the game progressing unit 113 instructs the display control unit 114 to control the display unit 18 to display the second shot selection button 60.

The operation reception unit 111 receives an operation (for example, a touch operation) of the user on the second shot selection button 60. In the game progressing unit 113, when the operation on the second shot selection button 60 is performed, a shot (hereinafter, also referred to as a "second shot") is executed in which success or failure (in other words, the arrival position of the ball 31) is decided based on environmental factors in the game space 30 and the attribute of the player character. Specifically, whether or not the ball 31 enters the cup 32 is decided based on environmental parameters and character attributes. More specifically, it is decided whether the ball 31 enters the cup 32, approaches the cup 32, or does not enter the cup 32 and approach the cup 32. Note that, here, the description "not ... approach the cup 32" means, for example, a case where the arrival position of the ball 31 is not within a predetermined range (for example, within a range determined as "approaches the cup 32" or "enters the cup 32") from the cup 32, and may include a case where the arrival position is closer to the cup 32 than a point where the shot is taken, a case where the shot ball 31 passes through the vicinity of the cup 32 (within the predetermined range) and arrives at outside of the predetermined range, and the like.

The environmental parameters are parameters that depend on the environment in which a shot is taken in the game space 30. Furthermore, it can also be said that the environmental parameters are parameters that depend on environmental factors of a stage. The environmental parameters are parameters that do not depend on characters. The environmental parameters include a distance parameter, a height difference parameter, and a curve parameter. The distance parameter is a parameter indicating a distance between the ball 31 and the cup 32. The height difference parameter is a parameter indicating a height difference between the ball 31 and the cup 32. The curve parameter is a parameter indicating how the shot ball 31 curves toward the cup 32 (in other words, how the line curves).

It can be said that the character attributes are parameters set for each character and are parameters specific to each character. The character attributes include a distance attribute, a height difference attribute, and a curve attribute. The distance attribute is a parameter regarding correction of the distance parameter. The height difference attribute is a parameter regarding correction of the height difference parameter. The curve attribute is a parameter regarding correction of the curve parameter.

In the second state, the game progressing unit 113 executes success rate decision processing of deciding a parameter related to success or failure of a shot based on the environmental parameters and the character attributes. Specifically, for example, the game progressing unit 113 decides a shot success rate (for example, a probability that the ball 31 enters the cup 32 and a probability that the ball 31 misses the cup 32) as the parameter related to success or failure of a shot. Here, the probability that the ball 31 misses the cup 32 includes a probability that the ball 31 approaches the cup 32 and a probability that the ball 31 does not approach the cup 32.

The shot success rate is decided, for example, by correcting, based on the character attributes, a probability reference value decided based on the environmental parameters. Specifically, the game progressing unit 113 calculates the probability reference value based on, for example, a value obtained by applying a predetermined weight to the distance parameter, a value obtained by applying a predetermined weight to the height difference parameter, and a value obtained by applying a predetermined weight to the curve parameter. For example, the game progressing unit 113 calculates the probability reference value such that the probability reference value decreases as the distance indicated by the distance parameter increases. Furthermore, for example, the game progressing unit 113 calculates the probability reference value such that the probability reference value decreases as the height difference indicated by the height difference parameter increases. Furthermore, for example, the game progressing unit 113 calculates the probability reference value such that the probability reference value decreases as the curve indicated by the curve parameter is larger or more complex. At this time, for example, the game progressing unit 113 may start the calculation from a probability of entering the cup 32 of 100%, and calculate the probability reference value by decreasing the probability of entering the cup 32, based on a value obtained by multiplying the distance parameter by a predetermined coefficient, a value obtained by multiplying the height difference parameter by a predetermined coefficient, and a value obtained by multiplying the curve parameter by a predetermined coefficient.

Furthermore, the game progressing unit 113 corrects the probability reference value based on the character attributes and decides the shot success rate. For example, in a case where the distance indicated by the distance parameter is a long distance, when the distance attribute of the player character indicates "strong at long distances", the game progressing unit 113 corrects the probability reference value such that the probability of entering the cup 32 increases. Furthermore, for example, in a case where the height difference indicated by the height difference parameter indicates that the cup 32 is positioned higher than the ball 31 (that is, an uphill slope), when the height difference attribute of the player character indicates "strong at uphill slopes", the game progressing unit 113 corrects the probability reference value such that the probability of entering the cup 32 increases. Furthermore, for example, in a case where the curve indicated by the curve parameter indicates that the ball 31 greatly curves, when the curve attribute of the player character indicates "strong at curved lines (for example, with an ability to read a line)", the game progressing unit 113 corrects the probability reference value such that the probability of entering the cup 32 increases.

Note that the "correcting, based on the character attributes, a probability reference value" does not necessarily mean that correction is made after deciding the probability reference value, and for example, when the probability of entering the cup 32 is obtained based on the value obtained by multiplying the distance parameter by a predetermined coefficient, the value obtained by multiplying the height difference parameter by a predetermined coefficient, and the value obtained by multiplying the curve parameter by a predetermined coefficient, each coefficient or each environmental parameters may be corrected based on the character attributes to decide the shot success rate. In other words, the "correcting, based on the character attributes, a probability reference value" is only required to reflect the character attribute in the decision of the shot success rate.

Furthermore, the probability reference value (in other words, the shot success rate before correction) and the shot success rate (in other words, the shot success rate after correction) may be obtained by a predetermined calculation formula for obtaining a probability from a plurality of parameters, or may be obtained using a predetermined table or the like.

Furthermore, the environmental parameters may be predetermined numerical values (for example, "distance parameter: OO meters" or the like) or may not be numerical values (for example, "height difference parameter: uphill slope" or the like). Furthermore, the character attributes may be predetermined numerical values or may not be numerical values.

Furthermore, the shot success rate may be decided by, for example, predetermined random draw executed based on environmental parameters and character attributes.

Note that the environmental parameters may include, for example, parameters indicating set weather, climate, season, or wind strength. For example, in a case where the weather is rainy, the ball 31 may be less likely to roll on the turf as compared with a case where the weather is sunny, and the shot success rate may vary (in other words, the shot success rate is adjusted) according to the weather. Furthermore, for example, in a case where the season is winter, the ball 31 may be likely to roll on the turf due to the freezing of the green as compared with a case where the season is spring, and the shot success rate may vary (in other words, the shot success rate is adjusted) according to the season.

Furthermore, the character attribute may include, for example, a parameter (for example, a parameter related to a score situation during the game and including, for example, temporary attributes during the game such as "being on a PAR putt" and "being likely to lose to an opponent") based on the content (in other words, the progress of the game) of the game up to that point related to the character or the like. For example, in the situation of being on a PAR putt or being likely to lose, the probability that the ball 31 enters the cup 32 may be higher than in a case where the score situation is in another predetermined situation.

When an input operation is performed on the second shot selection button 60, the game progressing unit 113 performs second shot execution processing of executing a shot (second shot) according to the shot success rate decided in the success rate decision processing. In other words, the second shot execution processing is processing of executing a shot according to the environmental parameters and the character attributes. In still other words, the second shot execution processing is processing of determining the arrival position of the ball 31 based on the environmental parameters and the character attribute. In still other words, the second shot execution processing is processing of deciding success or failure of a shot based on the environmental parameters and the character attributes.

That is, in the second shot execution processing, the shot is successful (in other words, the ball 31 enters the cup 32) with a probability corresponding to the shot success rate decided in the success rate decision processing. In other words, in the second shot execution processing, a random draw (in other words, a random draw for deciding the arrival position of the ball 31) for deciding whether or not the shot is successful is performed based on the shot success rate decided in the success rate decision processing. Note that the random draw may be performed before the input operation on the second shot selection button 60 is performed. In other words, whether or not the shot is successful may be decided in advance before the input operation on the second shot selection button 60 is performed.

The second shot execution processing is processing in which the degree of contribution of the user's skill in deciding the arrival position of the ball is lower than that in the first shot execution processing.

In the present embodiment, as illustrated in Fig. 7, the game progressing unit 113 instructs the display control unit 114 to control the display unit 18 to simultaneously display the second shot selection button 60 and the success/failure information object 61. In other words, the game progressing unit 113 performs control such that the success/failure information object 61 is displayed in a state where the input operation on the second shot selection button 60 can be performed. The success/failure information object 61 is an object indicating information regarding the success or failure of the shot in a case where the second shot selection button 60 is selected. Specifically, the game progressing unit 113 causes, for example, the probability that the ball 31 enters the cup 32, the probability that the ball approaches the cup 32, and the probability that the ball does not approach the cup 32 to be displayed as the shot success rate. Accordingly, the user can execute the second shot after confirming the success rate of the shot, so that the amusement of the game is improved. Note that the game progressing unit 113 may cause the probability reference value (in other words, the shot success rate before correction) to be displayed and then the shot success rate (in other words, the shot success rate after correction) to be displayed as the success/failure information object 61. Accordingly, the degree of influence of each character attribute can be easily understood, so that the amusement of the game is improved.

Furthermore, in the second state, the game progressing unit 113 can also execute the first shot execution processing. Specifically, as illustrated in Fig. 7, the game progressing unit 113 instructs the display control unit 114 to control the display unit 18 to simultaneously display the second shot selection button 60 and the moving object 40 (and the indicator object 50). Then, the game progressing unit 113 executes the second shot execution processing when an input operation (for example, a touch operation) on the second shot selection button 60 is performed, and executes the first shot execution processing when an input operation (for example, a touch operation, a swipe operation, and a release operation) on the moving object 40 is performed. That is, the game progressing unit 113 presents, to user via the display unit 18, whether to progress the game by the first shot execution processing (in other words, a manual play to be described later) or progress the game by the second shot execution processing (in other words, an automatic play to be described later) in a selectable manner. Furthermore, in the present embodiment, the operation (specifically, the operation on the moving object 40 or the operation on the second shot selection button 60) for progressing the game also serves as an operation for selecting whether to progress the game in manual play or progress the game in automatic play. Accordingly, the user can select whether to perform the first shot or the second shot in the second state, so that the amusement of the game is improved. Furthermore, the selection can be performed without switching the screen to progress the game, so that the amusement of the game is further improved. In addition, the display of the success/failure information object 61 can be used as a reference in selecting whether to perform the first shot or the second shot, so that the amusement of the game is improved. Furthermore, the display of the indicator object 50 can be used as a reference in selecting whether to perform the first shot or the second shot, so that the amusement of the game is improved.

Note that, in a case where the first shot execution processing in the second state is enabled, the success or failure of the shot (for example, whether or not the ball 31 enters the cup 32) may be decided depending on, for example, whether or not a derived value (for example, a value related to the power derived by the power decision processing, a value related to the trajectory of the ball derived by the trajectory decision processing, and the like) derived based on the input operation by the player is within a reference threshold derived based on the environmental parameters.

Note that in the second state, as illustrated in Fig. 7, the game progressing unit 113 may cause an object (hereinafter, referred to as an "environment information object 62") indicating information regarding the environmental parameters to be displayed. Fig. 7 illustrates an example in which the environment information object 62 indicating information regarding the distance parameter, the height difference parameter, and the curve parameter is displayed.

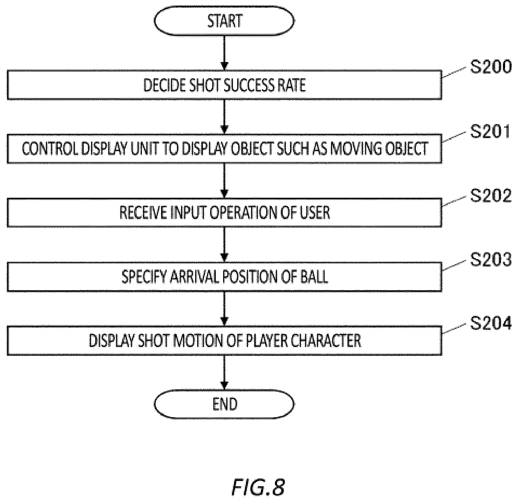

Next, a flow of processing executed by the terminal device 10 in the second state will be described with reference to Fig. 8. Fig. 8 is a flowchart illustrating the flow of the processing executed by the terminal device 10.

In step S200, the game progressing unit 113 decides the shot success rate based on the environmental parameter and the character attribute.

Next, in step S201, the display control unit 114 is instructed to control the display unit 18 to display an object such as the second shot selection button 60. Specifically, as illustrated in Fig. 7, the game progressing unit 113 instructs the display control unit 114 to control the display unit 18 to display the player character 33 taking an address posture, the second shot selection button 60, and the success/failure information object 61.

Next, in step S202, the game system 1 receives an input operation of the user on the touch screen 16. For example, in a case where the game progressing unit 113 determines that a predetermined range around the second shot selection button 60 is touched, the process proceeds to step S203.

Next, in step S203, the arrival position of the ball 31 is specified based on the environmental parameter and the character attribute. Specifically, the game progressing unit 113 decides the success or failure of the shot based on the shot success rate decided in step 200 (in other words, based on the environmental parameter and the character attribute).

Next, in step S204, the game progressing unit 113 causes the display unit 18 to display an image in which the player character performs a shot motion. Furthermore, the game progressing unit 113 moves the ball 31 toward the specified arrival position of the ball 31.

The game system repeatedly executes steps S200 to S204 for each shot.

As described above, in the first state, it is possible to progress the game in a first progress mode in which the game is progressed by the first shot execution processing. In other words, in the first state, it is possible to progress the game in manual play in which the game is progressed based on the operation of the user. Specifically, in the first state, it is possible to progress the game in the first progress mode in which the ball 31 as the operation target object is moved based on the first operation. The first operation includes an operation of selecting a predetermined position (specifically, a touch operation for selecting the moving object 40), an operation of moving a finger by a predetermined amount from the predetermined position (specifically, the swipe operation for moving the moving object 40), and an operation of releasing a predetermined operation at a targeted timing (specifically, an operation of releasing the operation on the moving object 40). Then, in the first progress mode, the arrival position of the ball 31 is decided according to the movement amount of the finger (in other words, the moving object 40) in the swipe operation and the timing of the release operation. In other words, the first operation includes an operation of deciding the power (in other words, the movement amount of the ball 31) of the shot and an operation of deciding the trajectory (in other words, the moving direction) of the ball 31.

Furthermore, in the second state, it is possible to progress the game in a second progress mode in which the game is progressed by the second shot execution processing. In other words, in the second state, it is possible to progress the game in the automatic play in which the game can be progressed without requiring at least part of the operation of the user that affects the progress of the game in the manual play. Specifically, in the second state, it is possible to progress the game only by the operation of selecting a predetermined position (specifically, a touch operation for selecting the second shot selection button 60), and it is possible to progress the game without requiring the operation of moving the finger by a predetermined amount from a predetermined position and the timing-targeting operation. That is, in the second state, it is possible to progress the game in the second progress mode in which the ball 31 as the operation target object is moved without the first operation. In the second progress mode, the arrival position of the ball 31 is decided regardless of the amount of movement of the finger or the targeted timing. Note that, in the second shot execution processing, in a case where the arrival position is decided based on the result of the random draw internally executed, or the like, the arrival position is decided substantially randomly although the arrival position of the ball 31 may change according to the timing of the operation, and the user cannot target the timing for guiding the ball to a predetermined arrival position, so that in such a case, it can be said that "the arrival position of the ball 31 is decided regardless of the targeted timing".

That is, in the second progress mode, the information regarding the input operation of the user used to decide the arrival position of the ball 31 is less than that in the first progress mode. Here, examples of the information regarding the input operation include information such as a movement amount in the operation, an operation time, an operation timing, and a direction indicated by the operation. In other words, the second progress mode is a progress mode of the game in which the influence of the player's skill on the decision of the arrival position of the ball 31 is reduced as compared with the first progress mode. In still other words, in the present embodiment, the automatic play can be said to be a play mode in which the influence of the user's skill on the achievement of the goal in the game is reduced as compared with the manual play. Furthermore, here, reducing the influence on the achievement of the goal includes a case where the type of operation (a touch operation, a tap operation, a slide operation, a swipe operation, and a flick operation) or the number of operations of the user affecting the operation target object is reduced, and a case where predetermined correction is performed on the operation of the user. Furthermore, the automatic play does not need to require all the operations in the manual play, and at least part of the operations may not be required, or at least part of the operations may be assisted. In the automatic play, artificial intelligence (AI) may be used to progress the game.

In the present embodiment, when a shot (in other words, a putt) on the green requiring more delicate operation compared with outside the green is performed, the game state becomes the second state, and the progress of the game in the automatic play becomes possible. That is, outside the green, it is sufficient to move the ball 31 with accuracy that prevents the ball 31 from straying off the fairway, while on the green, the ball 31 needs to be put into the cup 32, and the difficulty level of manual play becomes higher on the green compared with outside the green. For this reason, in a case where the ball 31 is to be put into the cup 32 by the manual play, there is a possibility that the user experiences stress, for example, when the user struggles with the shot. In the present embodiment, the progress of the game in the automatic play becomes possible for the shot on the green (in other words, a putt), so that the possibility that the user experiences stress can be reduced.

Furthermore, in the automatic play, the character attributes affect the success or failure of the shot. Therefore, the strategic nature of character selection is improved, so that the amusement of the game is improved.

Note that the progress of the game in the second progress mode may be performed without the operation of the user. Specifically, for example, in a case where the ball 31 is positioned on the green, the second shot execution processing may be automatically executed without requiring the operation of selecting the second shot selection button 60.

Furthermore, the progress of the game in the second progress mode is performed based on the operation (for example, the first operation) of the user similar to that when the game is progressed in the first progress mode, but the influence (for example, the influence on the decision of the arrival position of the ball 31) of the user's skill on the achievement of the predetermined goal may be reduced as compared with a case where the game is progressed in the first progress mode. Specifically, for example, in the second state, compared with the first state, the power of the shot decided in the power decision processing and the trajectory of the shot decided in the trajectory decision processing in a case where the game is progressed by operating the moving object 40 may have less influence on the decision of the arrival position of the ball 31. Specifically, for example, in the second state, unless the arrival position of the ball 31 decided by the power decision processing and the trajectory decision processing is greatly deviated from the cup 32, the game progressing unit 113 may perform correction processing on the arrival position of the ball 31 so that the ball 31 enters the cup 32. Furthermore, for example, the progress of the game in the second progress mode is performed based on the same number of times of operations (here, the types of operations may be different) as when the game is progressed in the first progress mode, but the influence (for example, the influence on the decision of the arrival position of the ball 31) of the user's skill on the achievement of the predetermined goal may be reduced as compared with a case where the game is progressed in the first progress mode.

Furthermore, in the second state, the progress of the game in the first progress mode may be impossible. For example, in the second state, the moving object 40 may not be displayed on the display unit 18, and the first shot execution processing may not be executed. Furthermore, in the first state, the progress of the game in the second progress mode may be impossible. For example, in the first state, the second shot selection button 60 may not be displayed on the display unit 18, and the second shot execution processing may not be executed.

### (First Modification)

Next, a modification related to the progress of the game in the second state will be described. As described above, in the second state, it is possible to progress the game in the second progress mode in which the game is progressed by the second shot execution processing of executing a shot according to the shot success rate decided in the success rate decision processing. In the present modification, the second shot execution processing includes success rate variation processing of varying the shot success rate decided in the success rate decision processing. Hereinafter, a game in which the shot success rate is varied by the success rate variation processing is also referred to as a "mini game".

The success rate variation processing is, for example, processing of varying the shot success rate decided in the success rate decision processing according to the timing of the input operation of the user. Here, the success rate variation processing will be specifically described.

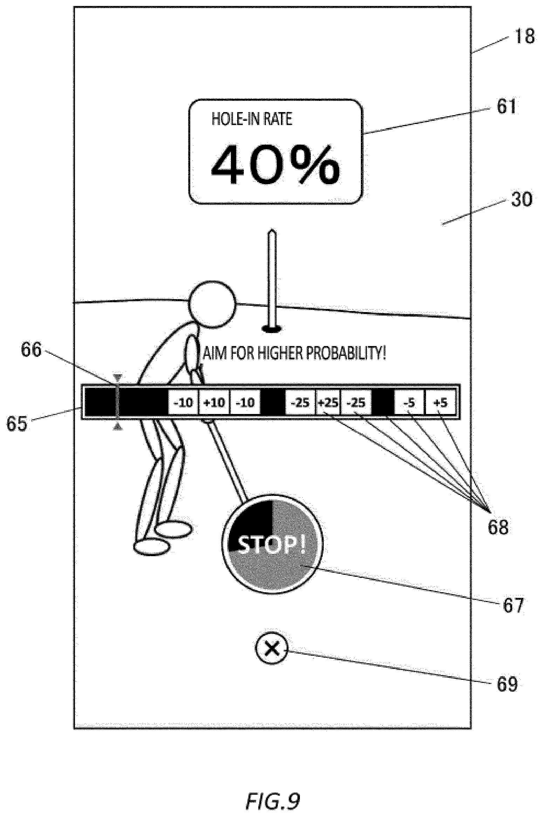

When the shot success rate is decided by the success rate decision processing, the game progressing unit 113 instructs the display control unit 114 to control the display unit 18 to display the success/failure information object 61 indicating the decided shot success rate (for example, the probability that the ball 31 enters the cup 32), a roulette object 65, a stop indicator 66, and a stop button 67 as illustrated in Fig. 9.

For example, the roulette object 65 is an object having a bar shape extending in a left-right direction and having a plurality of divided areas (hereinafter, referred to as "success rate variation area(s) 68"). The success rate variation areas 68 are, for example, areas indicating variation amounts of the shot success rate. Specifically, as the success rate variation areas 68, an area which allows the shot success rate to increase, an area which allows the shot success rate to decrease, an area which allows the shot success rate not to vary, and the like may be provided. In the example illustrated in Fig. 9, the shot success rate varies according to the probability described in each success rate variation area 68, and the success rate variation area 68 (in Fig. 9, an area filled in black) in which the probability is not described is an area in which the shot success rate does not vary.

The stop indicator 66 is a linear object that reciprocates left and right on the roulette object 65. The game progressing unit 113 varies the shot success rate by the variation amount indicated by the success rate variation area 68 of the point where the stop indicator 66 stops. Specifically, first, in a state where the roulette object 65 and the stop button 67 are displayed, the game progressing unit 113 reciprocates the stop indicator 66 left and right on the roulette object 65. Next, when the input operation (for example, a touch operation) on the stop button 67 is performed, the game progressing unit 113 stops the stop indicator 66. Next, the game progressing unit 113 determines the success rate variation area 68 (hereinafter, referred to as a "stop area 68") in which the stop indicator 66 has stopped and decides the variation amount of the shot success rate according to the stop area 68. Next, the game progressing unit 113 varies the shot success rate decided by the success rate decision processing by the decided variation amount. For example, when the stop indicator 66 has stopped in the success rate variation area 68 described as "+25" in Fig. 9, the shot success rate increases by 25%. Specifically, the shot success rate increases from 40% to 65%.

Note that the user may be able to select whether or not to perform the success rate variation processing in the second shot execution processing. Specifically, for example, the game progressing unit 113 may cause a skip button 69 to be displayed simultaneously with the success/failure information object 61, the roulette object 65, the stop button 67, and the like. Then, in a case where an input operation on the skip button 69 is performed, the success rate variation processing may not be performed. In other words, in a case where a predetermined input operation is performed, a shot may be executed while maintaining the shot success rate decided by the success rate decision processing without varying the shot success rate.

Furthermore, in a result of the success rate decision processing, there may be a case where the success rate variation processing is not executed. For example, the game progressing unit 113 may execute the success rate variation processing in a case where the shot success rate (for example, a probability that the ball enters the cup) becomes a predetermined probability (for example, 11% to 89%) as a result of the success rate decision processing, and may not execute the success rate variation processing in a case where the shot success rate does not become the predetermined probability.

Furthermore, a limit time may be set for a time for receiving an input operation on the stop button 67. Furthermore, the game progressing unit 113 may cause an object indicating the limit time to be displayed. Specifically, for example, as illustrated in Fig. 9, the stop button 67 may also serve as the object indicating the limit time. More specifically, for example, when an area of a specific color in the circular stop button 67 decreases with the lapse of time and the area of the specific color disappears, the input operation on the stop button 67 may be disabled. Note that, in a case where the stop button 67 is not operated within the limit time, the shot success rate may not be varied, and the variation amount of the shot success rate may be decided according to the position (in other words, the stop area 68) of the stop indicator 66 at the time when the limit time has elapsed.

### (Second Modification)

The golf game may be, for example, a match between a player character operated by a user using the terminal device 10 of the user and an opponent character operated by another user using the terminal device 10 of the another user or an opponent character operated by a computer. Note that, in the following, in the player character and the opponent character, a character that performs a shot first is referred to as a first-shot character, and a character that performs a shot later is referred to as a second-shot character. In a golf game in which such a match is played, in a case where the game state is the second state, the computer (for example, the game progressing unit 113) of the game system 1 may perform success rate correction processing of correcting the shot success rate. Then, the computer may execute a shot (second shot) with the shot success rate corrected by the success rate correction processing.

Specifically, for example, in a case where the second-shot character performs a putt with a specific number of strokes, based on results of the success rate decision processing and the success rate variation processing for the putt of the second-shot character and results of the success rate decision processing and the success rate variation processing for the putt of the first-shot character with the same number of strokes, the computer determines whether or not a specific condition (for example, whether a difference in shot success rate (for example, the probability that the ball 31 enters the cup 32) between the two is equal to or larger than a certain value) is satisfied. Furthermore, at this time, the computer also determines which character of the first-shot character or the second-shot character has a higher shot success rate.

When determining that the specific condition is satisfied, the computer determines whether the putt of the first-shot character is successful or failed (for example, whether or not the ball 31 enters the cup 32).

In a case where the first-shot character has a higher shot success rate and the specific condition is satisfied, when the putt of the first-shot character fails, the computer performs correction to reduce the shot success rate of the second-shot character. On the other hand, in a case where the first-shot character has a higher shot success rate and the specific condition is satisfied, when the putt of the first-shot character is successful, the computer does not perform correction on the shot success rate of the second-shot character.

Furthermore, in a case where the first-shot character has a lower shot success rate and the specific condition is satisfied, when the putt of the first-shot character fails, the computer does not perform correction on the shot success rate of the second-shot character. On the other hand, in a case where the first-shot character has a lower shot success rate and the specific condition is satisfied, when the putt of the first-shot character is successful, the computer performs correction to increase the shot success rate of the second-shot character.

When a shot of a character having a high shot success rate fails and a shot of a character having a low shot success rate is successful during the automatic play, a user who operates the character having a high shot success rate may feel a sense of unfairness. Furthermore, this sense of unfairness may increase depending on the result of the mini game or the like, and there is a possibility that the user's sense of satisfaction is weakened. According to the present modification, it is possible to reduce the possibility that the user feels a sense of unfairness and improve the amusement of the game.

### <Application to Another Game>

The configuration according to the present embodiment can also be applied to games other than the golf game. For example, the configuration according to the present embodiment can also be applied to a game in which an operation target object such as a ball or a player character is moved with the aim of achieving a predetermined goal. Furthermore, the configuration according to the present embodiment can also be applied to other games. Specific examples will be described below.

### (Application to RPG)

The configuration according to the present embodiment can also be applied to a role playing game (RPG) in which a player character as an operation target object is moved to defeat an enemy character (for example, a minor character and a boss character). Specifically, the configuration according to the present embodiment can also be applied to a game in which, on a predetermined stage (for example, dungeon or the like), the player character travels while defeating the minor character, and when the player character arrives at a location of the boss character, a battle against the boss character starts.

Specifically, for example, the game may be progressed in the second progress mode until the player character arrives at the location of the boss character, and the game may be progressed in the first progress mode when the player character arrives at the location of the boss character.

Here, the first progress mode is, for example, a progress mode of the game in which the user manually performs a motion such as movement of the player character, an attack on the enemy character, and recovery. On the other hand, the second progress mode can be, for example, a progress mode of the game in which at least part of the operation manually performed by the user in the first progress mode is automatically performed. Specifically, an action performed through the operation of the user in the first progress mode, such as an action of the player character approaching the enemy character, an action of the player character dodging the attack of the enemy character, an action of the player character attacking the enemy character, or an action of recovering a predetermined parameter such as a physical power value of the player character, may be performed without the operation of the user in the second progress mode. That is, it can be said that the second progress mode is a progress mode in which the game progressing unit 113 performs processing that assists the operation of the user and is not executed in the first progress mode.

Until the player character arrives at the location of the boss character, the game progressing unit 113 sets the game state to the second state in which the progress of the game in the second progress mode is possible, and when the player character arrives at the location of the boss character, the game progressing unit 113 sets the game state to the first state in which the progress of the game in the first progress mode is possible. That is, the switching of the game state is performed automatically (in other words, without the operation of the user) according to whether or not the player character arrives at the location of the boss character.

In the example of the RPG, when a relationship between the player character as the operation target object and the boss character as a predetermined object is a relationship that the player character is not positioned within a predetermined range from the boss character, the game state becomes the second state, and when the relationship is the relationship that the player character is positioned within the predetermined range, the game state becomes the first state. Note that such a correspondence relationship between the game state and the relationship between the player character and the boss character may be achieved by the game progressing unit 113 directly determining whether or not the relationship is established, or may be achieved by different processing. For example, the game progressing unit 113 may switch the game state by determining whether or not the player character is positioned within the predetermined range from the boss character, may switch the game state by determining whether or not the player character has arrived at a predetermined position (for example, a room of the boss character), or may switch the game state by determining whether or not a flag, which is set to a specific state when a battle with the boss character starts, is in the specific state.

### (Application to Music Game)

For example, the configuration according to the present embodiment can also be applied to a music game in which a predetermined shaped item (for example, a form such as a rod or a circle) as the operation target object moves on the screen of the display unit 18, and the user operates the input unit 17 in accordance with a timing at which the predetermined shaped item is positioned at a predetermined position on the screen. Specifically, the configuration according to the present embodiment can also be applied to a game in which a predetermined operation is performed in accordance with the song with the aim of completing a predetermined song, achieving a predetermined score, or the like. In this case, it can be said that the operation on the input unit 17 is an operation that gives an effect such as making a predetermined shaped item light up and disappear.

Specifically, the game may be progressed in the first progress mode until arriving at a difficult scene during the game, and the game may be progressed in the second progress mode when arriving at the difficult scene.

Here, the first progress mode is, for example, a progress mode in which, for all predetermined shaped items moving on the screen, an operation on the input unit 17 is performed in accordance with a timing at which each predetermined shaped item is positioned at a predetermined position. On the other hand, the second progress mode can be, for example, a progress mode of the game in which at least part of the operation manually performed by the user in the first progress mode is automatically performed. Specifically, for at least part of the predetermined shaped items moving on the screen, the game may be progressed assuming that the operation on the input unit 17 is performed at a timing when the predetermined shaped item is positioned at a predetermined position (in other words, the operation of the user is not performed). That is, it can be said that the second progress mode is a progress mode in which the game progressing unit 113 performs processing that assists the operation of the user and is not executed in the first progress mode. Note that the success rate of the operation automatically performed in the second progress mode may be decided based on the success rate calculated based on the operation of the user in the first progress mode (in other words, a result of playing up to that point). Here, the success rate is, for example, a parameter indicating whether each operation is performed at an accurate timing, is performed at a slightly shifted timing, or is performed at a greatly shifted timing, or the like.

Until arriving at a difficult scene in the song, the game progressing unit 113 sets the game state to the first state in which the progress of the game in the first progress mode is possible, and when arriving at the difficult scene, the game progressing unit 113 sets the game state to the second state in which the progress of the game in the second progress mode is possible. That is, the switching of the game state is performed automatically (in other words, without the operation of the user) according to whether or not the play is in a difficult scene. Note that, here, the game state is switched when shifting to a scene with a high difficulty level, but the description "when shifting to a scene with a high difficulty level" or "the case of shifting to a scene with a high difficulty level" may mean that the state changes after the shift or that the shift occurs after the state change. In other words, it is sufficient that the correspondence relationship between the difficulty level and the state (in other words, the progress mode of the game) is established.

In the example of the music game, for example, in a case where a relationship between an operation target object to be operated next and an operation target object, as the predetermined object, other than the operation target object to be operated next is a predetermined density (in other words, in a case where the number, types, or the like of operation target objects within a predetermined range is equal to or more than a predetermined number), the game state may be the second state, and in a case where the relationship is not the predetermined density, the game state may be the first state. Note that such a correspondence relationship between the game state and the relationship between the specific operation target object and another operation target object may be achieved by the game progressing unit 113 directly determining whether or not the relationship is established, or may be achieved by different processing. For example, the game progressing unit 113 may determine the number of operation target objects positioned within the predetermined range and switch the game state, or may determine whether or not the performance of the song has arrived at a predetermined position and switch the game state.

### (Application to Mahjong Game)

The configuration according to the present embodiment can also be applied to a mahjong game in which tiles to be discarded are selected from among hand tiles as operation target objects with the aim of winning hand (in other words, victory).

Specifically, until arriving at a difficult scene during the game, the game may be progressed in the first progress mode, and when arriving at the difficult scene, the game may be progressed in the second progress mode.

Here, the first progress mode is, for example, a progress mode in which the user selects tiles to discard by himself/herself and progresses the game. On the other hand, the second progress mode may be, for example, a progress mode in which the tiles to be discarded are selected automatically without the operation of the user and the game is progressed. In the second progress mode, the tiles to be discarded may be decided by the game progressing unit 113, based on tile efficiency, a point value in the case of winning hand, or the like.

Until arriving at a difficult scene in a round, the game progressing unit 113 sets the game state to the first state in which the progress of the game in the first progress mode is possible, and when arriving at the difficult scene, the game progressing unit 113 sets the game state to the second state in which the progress of the game in the second progress mode is possible. That is, the switching of the game state is performed automatically (in other words, without the operation of the user) according to whether or not the play is in a difficult scene.

In the example of the mahjong game, for example, in a case where in a relationship between a specific tile among the hand tiles (for example, fourteen tiles) as the operation target objects and the tiles (for example, other thirteen tiles), as predetermined objects, other than the specific tile, the number of tiles of the same type (for example, characters, circles, or bamboo, or the like) is equal to or more than a predetermined number, the game state may be the second state, and in a case where the number of tiles is not equal to or more than the predetermined number, the game state may be the first state. In the second state, a button instructing automatic selection of a discard tile may be displayed on the screen of the display unit 18, and the game in the second progress mode may be progressed by the user performing an operating on the button. Furthermore, in the second state, when a predetermined time has elapsed without the operation from the user, the game may be progressed in the second progress mode in which the discard tile is automatically selected. Note that such a correspondence relationship between the game state and the relationship between the specific operation target object and another operation target object may be achieved by the game progressing unit 113 directly determining whether or not the relationship is established, or may be achieved by different processing.

### (Application to Shooting Game)

For example, the configuration according to the present embodiment can also be applied to a shooting game in which a player character (in other words, own machine) as an operation target object is moved with the aim of stage clearing.

Specifically, until arriving at a difficult scene during the game, the game may be progressed in the first progress mode, and when arriving at the difficult scene, the game may be progressed in the second progress mode.

Here, the first progress mode is, for example, a progress mode of the game in which the user manually moves the player character and attacks the enemy character. On the other hand, the second progress mode may be, for example, a progress mode of the game in which at least part of the operation manually performed by the user in the first progress mode is automatically performed. Specifically, an action performed through the operation of the user in the first progress mode, such as an action of the player character dodging projectiles of the enemy character, an action of the player character attacking the enemy character, or an action of aiming at the enemy character, may be performed without the operation of the user in the second progress mode. That is, it can be said that the second progress mode is a progress mode in which the game progressing unit 113 performs processing that assists the operation of the user and is not executed in the first progress mode.

Until arriving at a difficult scene in a stage, the game progressing unit 113 sets the game state to the first state in which the progress of the game in the first progress mode is possible, and when arriving at the difficult scene, the game progressing unit 113 sets the game state to the second state in which the progress of the game in the second progress mode is possible. That is, the switching of the game state is performed automatically (in other words, without the operation of the user) according to whether or not the play is in a difficult scene.

In the example of the shooting game, when a relationship between the player character as the operation target object and the boss character as a predetermined object is a relationship that the player character is not positioned within a predetermined range from the boss character, the game state may become the first state, and when the relationship is the relationship that the player character is positioned within the predetermined range, the game state may become the second state. Furthermore, when a relationship between the player character as the operation target object and projectiles of the enemy as a predetermined object is a relationship in which a ratio of the projectiles of the enemy occupying a predetermined range from the player character is a predetermined ratio or more, the game state may become the first state. Note that such a correspondence relationship between the game state and the relationship between the player character and the boss character or the projectiles of the enemy may be achieved by the game progressing unit 113 directly determining whether or not the relationship is established, or may be achieved by different processing.

### (Application to Go Game)

For example, the configuration according to the present embodiment can also be applied to a Go game in which a stone as the operation target object is placed on a board with the aim of winning.

Here, the first progress mode is, for example, a progress mode in which the user selects where to place the stone and progresses the game. On the other hand, the second progress mode may be, for example, a progress mode in which a location where the stone is placed is selected automatically without the operation of the user and the game is progressed.

Until the match arrives at an endgame phase, the game progressing unit 113 sets the game state to the first state in which the progress of the game in the first progress mode is possible, and when the match arrives at an endgame phase, the game progressing unit 113 sets the game state to the second state in which the progress of the game in the second progress mode is possible. That is, the switching of the game state is performed automatically (in other words, without the operation of the user) according to whether or not the match is in the endgame phase. That is, in the case of arriving at a difficult scene, the switching of the game state may not be performed, and, for example, at the endgame phase of the game, the switching may be performed.

In the example of the Go game, in a case where a relationship between a stone placed as the operation target object by the user and stones already placed as predetermined objects on the board is a predetermined relationship, the game state may become the second state. Specifically, in a case where the number of places (for example, effective locations) where the stone as the operation target object can be placed is equal to or less than a predetermined number in relation to the stones already placed on the board (for example, in a case where the number of possible choices is equal to or less than the predetermined number), the game state may become the second state. Note that such a correspondence relationship between the game state and the relationship between the stone to be placed and the stones on the board may be achieved by the game progressing unit 113 directly determining whether or not the relationship is established, or may be achieved by different processing.

Note that the present invention is not limited to the above-described embodiment, and various modifications can be made without departing from the gist thereof. In the present invention, it is possible to freely combine each component, to modify an arbitrary component, or to omit an arbitrary component within the scope of the invention. Furthermore, the flow of the processing described in the present specification is merely an example, and the order and configuration of each processing may vary.

### <Supplementary Note>

The matters described in the above-described embodiment can also be described as the following supplementary notes.

### (Supplement note 1)

A program which causes a computer to function as:
a first progress means which progresses a game in a first progress mode in which the game is progressed based on an operation of a user (game progressing unit 113);
a second progress means which progresses the game in a second progress mode in which the game is able to be progressed without requiring at least part of the operation of the user that affects progress of the game in the first progress mode (game progressing unit 113); and
a success/failure decision means which decides success or failure of a predetermined event when progressing the game in the second progress mode, based on an environment in a game space and an attribute of a character operated by the user (game progressing unit 113). According to such a configuration, the attribute of the character affects the success or failure of the predetermined event when progressing the game in the second progress mode. Therefore, the strategic nature of character selection is improved, so that the amusement of the game is improved.

### (Supplement note 2)

The program according to supplementary note 1, in which the success/failure decision means corrects a probability reference value decided based on the environment in the game space, based on the attribute of the character to obtain a probability regarding the success or failure of the predetermined event.
According to such a configuration, the success rate of the predetermined event changes according to the attribute of the character, so that the amusement of the game can be improved.

### (Supplement note 3)

The program according to supplementary note 1 or 2 which causes the computer to further function as
a means which presents, to the user, whether to progress the game in the first progress mode or progress the game in the second progress mode in a selectable manner when a predetermined condition is satisfied for a predetermined object in the game space. According to such a configuration, in a case where a predetermined situation occurs during the game, the user can select whether to progress the game in the first progress mode or the second progress mode. Therefore, it is possible to widen the range of game characteristics and improve the amusement of the game.

### (Supplement note 4)

An information processing system including:
a first progress means which progresses a game in a first progress mode in which the game is progressed based on an operation of a user (game progressing unit 113);
a second progress means which progresses the game in a second progress mode in which the game is able to be progressed without requiring at least part of the operation of the user that affects progress of the game in the first progress mode (game progressing unit 113); and
a success/failure decision means which decides success or failure of a predetermined event when progressing the game in the second progress mode, based on an environment in a game space and an attribute of a character operated by the user (game progressing unit 113). According to such a configuration, functions and effects similar to those of the program described in supplementary note 1 can be obtained.

### EXPLANATION OF REFERENCES

1: game system; 10: terminal device; 11: processor; 12: memory; 13: storage; 16: touch screen; 17: input unit; 18: display unit; 20: server; 21: processor; 22: memory; 23: storage; 30: game space; 31: ball; 32: cup; 33: player character; 110: control unit; 111: operation reception unit; 112: transmission/reception unit; 113: game progressing unit; 114: display control unit; 120: storage unit; 210: control unit; 211: transmission/reception unit; 212: server processing unit; 213: data management unit; 214: synchronization processing unit; and 220: storage unit.

## Claims

1. A program which causes a computer to function as:
a first progress means which progresses a game in a first progress mode in which the game is progressed based on an operation of a user;
a second progress means which progresses the game in a second progress mode in which the game is able to be progressed without requiring at least part of the operation of the user that affects progress of the game in the first progress mode; and
a success/failure decision means which decides success or failure of a predetermined event when progressing the game in the second progress mode, based on an environment in a game space and an attribute of a character operated by the user.

2. The program according to claim 1, wherein
the success/failure decision means corrects a probability reference value decided based on the environment in the game space, based on the attribute of the character to obtain a probability regarding the success or failure of the predetermined event.

3. The program according to claim 1 or 2 which causes the computer to further function as
a means which presents, to the user, whether to progress the game in the first progress mode or progress the game in the second progress mode in a selectable manner when a predetermined condition is satisfied for a predetermined object in the game space.

4. An information processing system comprising:
a first progress means which progresses a game in a first progress mode in which the game is progressed based on an operation of a user;
a second progress means which progresses the game in a second progress mode in which the game is able to be progressed without requiring at least part of the operation of the user that affects progress of the game in the first progress mode; and
a success/failure decision means which decides success or failure of a predetermined event when progressing the game in the second progress mode, based on an environment in a game space and an attribute of a character operated by the user.
